# EUROPÄISCHE PATENTSCHRIFT

(11) **EP 4 109 046 B1**
(45) Veröffentlichungstag und Bekanntmachung des Hinweises auf die Patenterteilung: **07.08.2024**
(21) Anmeldenummer: 21180509.8
(22) Anmeldetag: 21.06.2021
(51) Int. Cl.: G01D 5/244, G01D 5/347

(54) **POSITIONSMESSEINRICHTUNG**
POSITION MEASURING DEVICE
DISPOSITIF DE MESURE DE POSITION

(43) Veröffentlichungstag der Anmeldung: 28.12.2022
(73) Patentinhaber: Dr. Johannes Heidenhain GmbH, 83301 Traunreut (DE)
(72) Erfinder: RÖTZER, Martin, 83278 Traunstein (DE); NUTZINGER, Tarek, 83377 Vachendorf (DE); SCHLICKSBIER, Thilo, 83278 Traunstein (DE)

(56) Entgegenhaltungen:
- WO-A1-2020/188432
- US-A- 3 816 002
- US-A- 4 892 416

## Beschreibung

### GEBIET DER TECHNIK

Die vorliegende Erfindung betrifft eine Positionsmesseinrichtung nach dem Oberbegriff des Anspruchs 1.

### STAND DER TECHNIK

EP 2 781 890 A1 offenbart eine Positionsmesseinrichtung, insbesondere eine Längenmesseinrichtung. Die Positionsmesseinrichtung umfasst einen Maßstab in einem Gehäuse, welches denselben aufnimmt, und eine Abtasteinheit, welche den Maßstab abtastet. Das Gehäuse oder ein endseitiges Deckelelement desselben hat ein Einstellloch für eine Spalteinstellung an einer Position, die einem Spalt zwischen dem Maßstab und der Abtasteinheit entspricht.

US 3 816 002 A offenbart eine Positionsmesseinrichtung nach dem Oberbegriff des Anspruchs 1.

Weitere Längenmesseinrichtungen mit einem zweiteiligen bzw. mehrteiligen Gehäuseprofil sind aus DE 27 29 708 B1 und US 4 892 416 A bekannt.

### ZUSAMMENFASSUNG DER ERFINDUNG

Der vorliegenden Erfindung liegt die Aufgabe zugrunde, eine Positionsmesseinrichtung anzugeben, die einfach und kostengünstig aufgebaut ist und mit der eine präzise Positionsmessung in Längsrichtung eines innerhalb eines Gehäuses der Positionsmesseinrichtung angeordneten Maßstabs ermöglicht wird.

Diese Aufgabe wird erfindungsgemäß durch die Positionsmesseinrichtung mit den Merkmalen des Anspruchs 1 gelöst.

Die erfindungsgemäß ausgebildete Positionsmesseinrichtung umfasst einen Grundkörper, ein sich in einer Längsrichtung erstreckendes und mit dem Grundkörper verbundenes erstes Gehäuseteil und ein sich in Längsrichtung erstreckendes und mit dem Grundkörper verbundenes zweites Gehäuseteil. Durch zumindest das erste Gehäuseteil und das zweite Gehäuseteil wird ein Hohlprofil gebildet. Die Positionsmesseinrichtung weist einen innerhalb des Hohlprofils angeordneten Maßstab und eine Abtasteinheit zur Abtastung des Maßstabs auf. Der Grundkörper und der Maßstab sind unmittelbar miteinander verbunden. Die Positionsmesseinrichtung weist einen Mitnehmer zum Tragen der Abtasteinheit auf. Die Abtasteinheit umfasst ein Kabel. Der Mitnehmer ist derart ausgebildet, dass das Kabel durch zumindest einen Teil des Mitnehmers hindurch geführt werden kann. Der Mitnehmer hat eine in einem Längsabschnitt des Mitnehmers vorgesehene Aussparung. Der Mitnehmer weist ein mit der Aussparung korrespondierendes und mit einem komplementären Teil des Mitnehmers lösbar verbundenes Verschlusselement auf. Der Mitnehmer hat eine erste Innenkontur. Das Verschlusselement hat eine der ersten Innenkontur gegenüberliegende zweite Innenkontur. Durch die erste Innenkontur und die zweite Innenkontur wird eine Öffnung zur Aufnahme und Hindurchführung des Kabels gebildet. Die Öffnung erstreckt sich durch den Längsabschnitt des Mitnehmers hindurch.

Insbesondere grenzt der Maßstab an eine Anbaufläche des Grundkörpers an. Die Anbaufläche ist eine dem Maßstab zugewandte, insbesondere seitliche Oberfläche des Grundkörpers (z. B. Maschinenbett).

Vorzugsweise sind der Grundkörper und das erste Gehäuseteil und/oder der Grundkörper und das zweite Gehäuseteil jeweils unmittelbar miteinander verbunden.

Es ist vorteilhaft, wenn das Hohlprofil durch den Grundkörper, das erste Gehäuseteil und das zweite Gehäuseteil gebildet wird.

Ferner ist es vorteilhaft, wenn die Abtasteinheit relativ zum Hohlprofil in Längsrichtung, vorzugsweise unabhängig vom Maßstab und/oder unabhängig vom ersten und zweiten Gehäuseteil, bewegbar ist.

Unter "unabhängig bewegbar" wird dabei verstanden, dass die Abtasteinheit nicht am Maßstab bzw. nicht am ersten und zweiten Gehäuseteil geführt ist (sogenanntes ungeführtes System). Ungeführte Systeme können in Ultrapräzisionsmaschinen eingesetzt werden.

Der Mitnehmer umfasst eine Kabeldurchführung für das Kabel der Abtasteinheit.

Der Mitnehmer weist vorzugsweise ein Adapterstück zur Verbindung der Abtasteinheit mit dem Mitnehmer auf. Durch das Adapterstück wird eine Einstellung bzw. Ausrichtung der Abtasteinheit relativ zum Maßstab ermöglicht. Diese Einstellung bzw. Ausrichtung kann in mehreren

Freiheitsgraden (z. B. Abstand/Parallelität, Moiré-Winkel und/oder Höhe) erfolgen.

Ein Teilesatz für eine erfindungsgemäße Positionsmesseinrichtung ist in Anspruch 13 angegeben.

Durch die Erfindung wird eine Unabhängigkeit des Maßstabs von Einflüssen (z. B. thermische Ausdehnung und/oder Schwingungen) des durch das erste und zweite Gehäuseteil gebildeten, insbesondere zweiteiligen Gehäuses erreicht. Dies ermöglicht wiederum eine präzise Positionsmessung in Längsrichtung des Maßstabs. Hierzu ist insbesondere der Maßstab, anstatt mit dem zweiteiligen Gehäuse, unmittelbar (d. h. direkt) mit dem Grundkörper (z. B. Maschinenbett) verbunden. Es besteht also nur eine direkte Verbindung des Maßstabs mit dem Grundkörper und keine direkte Verbindung des Maßstabs mit einem der beiden Gehäuseteile oder mit beiden Gehäuseteilen. Dadurch kann eine Reduzierung der Genauigkeit der Positionsmessung durch die vorgenannten Einflüsse vermieden werden. Im Gegensatz zum bekannten Stand der Technik, bei dem der Maßstab innerhalb des insbesondere zweiteiligen Gehäuses angeordnet ist und die Einheit aus Gehäuse und Maßstab wiederum auf dem Grundkörper (d. h. Maschinenbett) angeordnet ist bzw. mit diesem verbunden ist, wird durch die Erfindung zudem ein einfacher und kostengünstiger Aufbau erreicht. Dies folgt insbesondere aus der einfachen und kostengünstigen Ausführung der Kapselung. Darüber hinaus ermöglicht die Erfindung eine Demontage des zweiteiligen Gehäuses unabhängig vom mit dem Grundkörper unmittelbar verbundenen Maßstab. Dadurch können ein Verstellen einer Positionierung bzw. Ausrichtung des Maßstabs und somit eine Dejustage der Positionsmesseinrichtung vermieden werden. Dies ist insbesondere bei einer möglicherweise nötigen Reinigung der Positionsmesseinrichtung von Vorteil.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von möglichen Ausführungsbeispielen der Erfindung in Verbindung mit den Figuren erläutert.

### KURZE BESCHREIBUNG DER ZEICHNUNGEN

Es zeigen
- Figur 1: eine perspektivische Ansicht einer beispielhaften Positionsmesseinrichtung;
- Figur 2: eine Querschnittsansicht der Positionsmesseinrichtung nach Figur 1;
- Figur 3a: eine perspektivische Ansicht einer Endseite der Positionsmesseinrichtung nach Figur 1;
- Figur 3b: eine perspektivische Explosionsansicht der Endseite der Positionsmesseinrichtung nach Figur 1;
- Figur 4: eine Querschnittsansicht der Endseite der Positionsmesseinrichtung nach Figur 1 im Bereich einer zweiten (oberen) Dichtschnur;
- Figur 5a: eine perspektivische Ansicht eines Mitnehmers der Positionsmesseinrichtung nach Figur 1;
- Figur 5b: eine perspektivische Ansicht des Mitnehmers nach Figur 5a mit einem von einem komplementären Teil des Mitnehmers gelösten Verschlusselement;
- Figur 6a: eine Draufsicht auf den Mitnehmer nach Figur 5a zur Veranschaulichung eines L-förmig ausgebildeten Abschnitts;
- Figur 6b: eine Querschnittsansicht des Mitnehmers nach Figur 5a im Mittenbereich des Mitnehmers;
- Figur 7: eine perspektivische Ansicht des Verschlusselements nach Figur 5b; und
- Figur 8: eine perspektivische Explosionsansicht der Positionsmesseinrichtung nach Figur 1.

### BESCHREIBUNG DER AUSFÜHRUNGSFORMEN

Gleiche Elemente oder funktionell gleiche Elemente sind in den Figuren mit gleichen Bezugszeichen versehen.

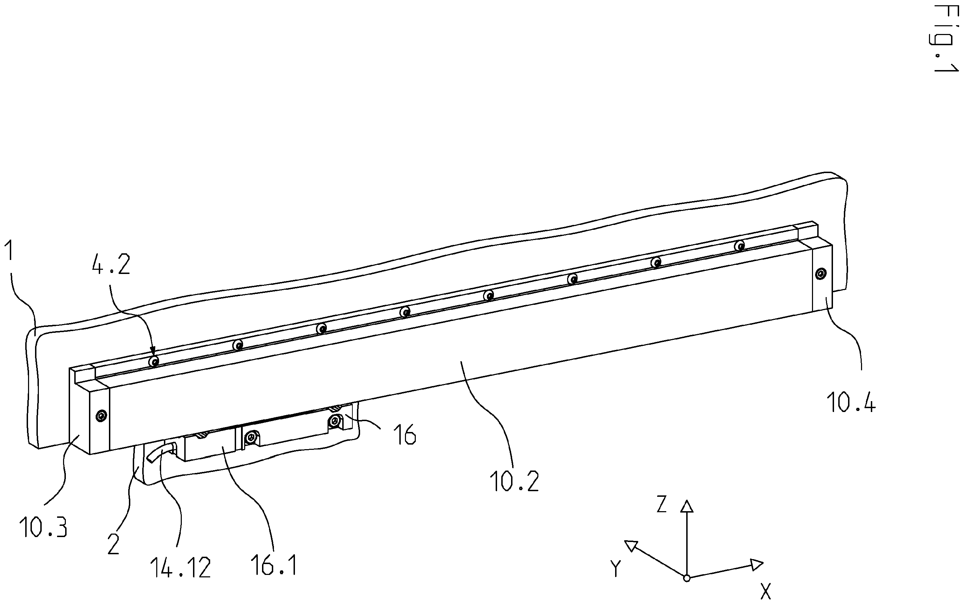

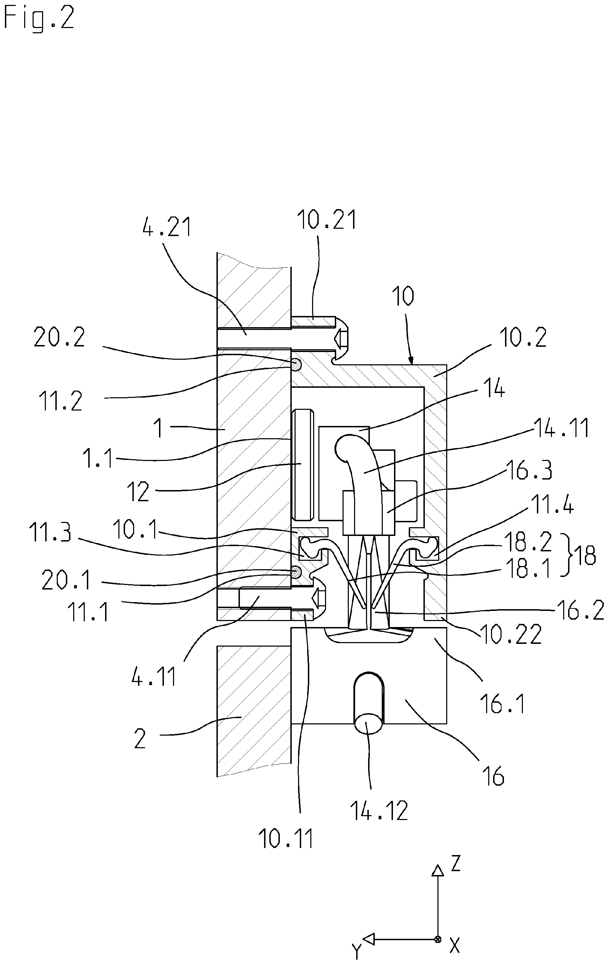

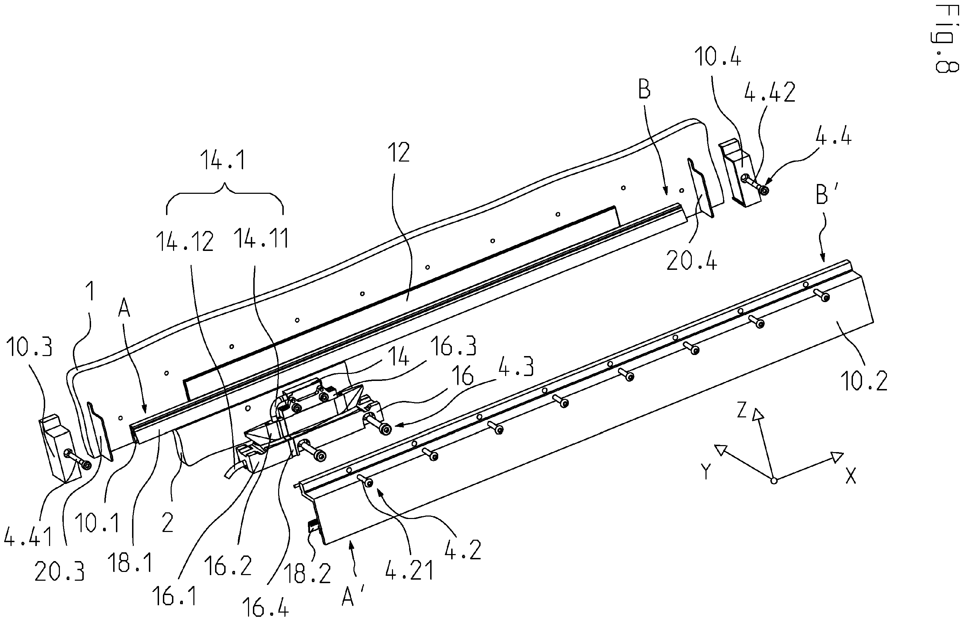

Ein Ausführungsbeispiel wird nachfolgend anhand der Figuren 1 bis 8 erläutert. Die Positionsmesseinrichtung gemäß dem Ausführungsbeispiel umfasst einen Grundkörper 1 (z. B. Maschinenbett oder Grundkörper der Maschine), ein sich in einer Längsrichtung X erstreckendes und mit dem Grundkörper 1 verbundenes erstes Gehäuseteil 10.1 und ein sich in Längsrichtung X erstreckendes und mit dem Grundkörper 1 verbundenes zweites Gehäuseteil 10.2 (vgl. Figur 8). Durch zumindest das erste Gehäuseteil 10.1 und das zweite Gehäuseteil 10.2 wird ein Hohlprofil 10 gebildet (vgl. Figur 2). Die Positionsmesseinrichtung weist einen innerhalb des Hohlprofils 10 angeordneten Maßstab 12 und eine dem Maßstab 12 gegenüberliegende Abtasteinheit 14 zur Abtastung des Maßstabs 12 auf. Der Grundkörper 1 und der Maßstab 12 sind unmittelbar miteinander verbunden.

Wie in Figur 2 gezeigt, grenzt der Maßstab 12 an eine Anbaufläche 1.1 des Grundkörpers 1 an. Die Anbaufläche 1.1 ist eine dem Maßstab 12 zugewandte, seitliche Oberfläche des Grundkörpers 1.

Die Positionsmesseinrichtung ist insbesondere eine Längenmesseinrichtung. Hierzu sind der Maßstab 12 und die Abtasteinheit 14 in Längsrichtung X (d. h. Messrichtung) relativ zueinander bewegbar. Die Abtasteinheit 14 tastet bei der Positionsmessung eine Messteilung des Maßstabs 12 ab und bildet daraus Positionsmesswerte. Die Messteilung ist in den Figuren nicht dargestellt.

Der Grundkörper 1 und das erste Gehäuseteil 10.1 sind über Befestigungsschrauben unmittelbar miteinander verbunden. In Figur 2 ist eine dieser Befestigungsschrauben (Befestigungsschraube 4.11) sichtbar. Ferner sind der Grundkörper 1 und das zweite Gehäuseteil 10.2 über Befestigungsschrauben 4.2 unmittelbar miteinander verbunden. In Figur 2 ist eine dieser Befestigungsschrauben 4.2 (Befestigungsschraube 4.21) sichtbar. Die Befestigungsschraube 4.21 ist der Befestigungsschraube 4.11 zugeordnet, d. h. die Befestigungsschrauben 4.11, 4.21 sind in Z-Richtung übereinanderliegend angeordnet. Die Z-Richtung verläuft senkrecht zur Längsrichtung X und parallel zur Anbaufläche 1.1 des Grundkörpers 1. Im Folgenden wird die Z-Richtung auch als "erste Richtung" bezeichnet.

Unmittelbar miteinander verbunden bedeutet, dass die jeweiligen Elemente direkt, d. h. nicht über ein oder mehrere Zwischenelemente miteinander verbunden sind.

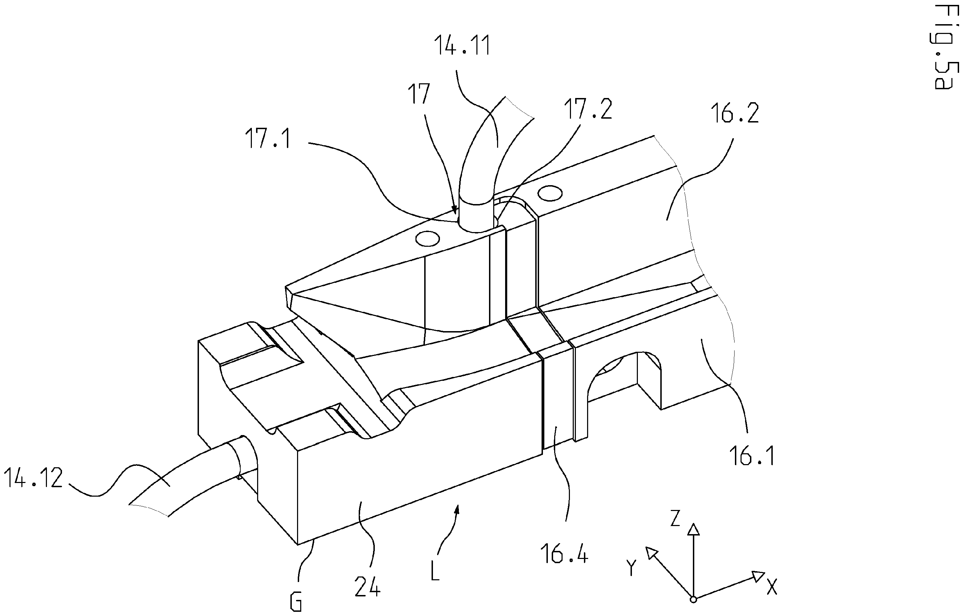

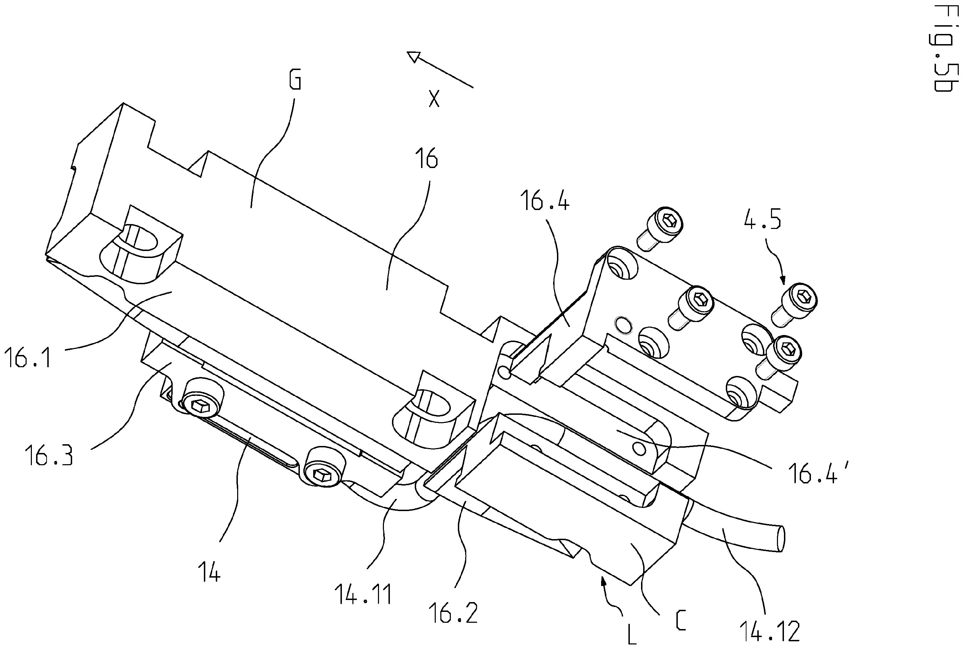

Mit Bezug auf Figur 2 wird das Hohlprofil 10 in seiner Gesamtheit durch den Grundkörper 1, das erste Gehäuseteil 10.1 und das zweite Gehäuseteil 10.2 gebildet. In Längsrichtung X verlaufend weist die Positionsmesseinrichtung eine erste Dichtlippe 18.1 und eine zweite Dichtlippe 18.2 (im Folgenden Dichtlippen 18) auf. Die Dichtlippen 18 sind am unteren Ende des Hohlprofils 10 angeordnet. Durch die Dichtlippen 18 greift ein Mitnehmer 16, der die Abtasteinheit 14 trägt. Nähere Einzelheiten zum Mitnehmer 16 werden später noch im Zusammenhang mit Figur 5 bis 7 (bzw. 8) beschrieben.

Wie in Figur 2 gezeigt, liegen sich die Dichtlippen 18 in Y-Richtung einander gegenüber. Die Y-Richtung verläuft senkrecht zur Anbaufläche 1.1 des Grundkörpers 1. Im Folgenden wird die Y-Richtung auch als "zweite Richtung" bezeichnet.

Mit Bezug auf Figur 2 hat das erste Gehäuseteil 10.1 einen ersten Abschnitt 10.11 zur Befestigung des ersten Gehäuseteils 10.1 am Grundkörper 1. Ferner hat das zweite Gehäuseteil 10.2 einen dem Grundkörper 1 zugewandten zweiten Abschnitt 10.21 zur Befestigung des zweiten Gehäuseteils 10.2 am Grundkörper 1. Der erste Abschnitt 10.11 ist auf einer ersten (unteren) Seite des Maßstabs 12 angeordnet. Der zweite Abschnitt 10.21 ist auf einer der ersten Seite gegenüberliegenden zweiten (oberen) Seite des Maßstabs 12 angeordnet. Der erste Abschnitt 10.11 und der zweite Abschnitt 10.21 sind in der ersten Richtung (d. h. Z-Richtung) einander gegenüberliegend angeordnet. Wie in Figur 2 gezeigt, erstreckt sich durch den ersten Abschnitt 10.11 die Befestigungsschraube 4.11. Ferner erstreckt sich durch den zweiten Abschnitt 10.21 die Befestigungsschraube 4.21. Das durch das erste und zweite Gehäuseteil 10.1, 10.2 gebildete zweiteilige Gehäuse erstreckt sich somit beidseitig des Maßstabs 12 bis auf den Grundkörper 1 und umgibt den Maßstab 12 auf der oberen und unteren Seite.

Die Positionsmesseinrichtung weist ein erstes bis viertes Dichtelement 20.1 bis 20.4 auf (vgl. Figur 2 und 8). Wie in Figur 2 gezeigt, hat das erste Gehäuseteil 10.1 eine an den Grundkörper 1 angrenzende erste Ausnehmung 11.1 zur Aufnahme des ersten Dichtelements 20.1. Ferner hat das zweite Gehäuseteil 10.2 eine an den Grundkörper 1 angrenzende zweite Ausnehmung 11.2 zur Aufnahme des zweiten Dichtelements 20.2. Die erste Ausnehmung 11.1 und die zweite Ausnehmung 11.2 erstrecken sich jeweils in Längsrichtung X.

Beispielsweise ist das erste Dichtelement 20.1 eine erste Dichtschnur. Ferner ist das zweite Dichtelement 20.2 beispielsweise eine zweite Dichtschnur. Das erste Dichtelement 20.1 und das zweite Dichtelement 20.2 erstrecken sich jeweils in Längsrichtung X. Das erste und zweite Dichtelement 20.1, 20.2 sind von der ersten und zweiten Ausnehmung 11.1, 11.2 jeweils über ihre gesamte Länge aufgenommen.

Durch das erste und zweite Dichtelement 20.1, 20.2 kann das durch das erste und zweite Gehäuseteil 10.1, 10.2 gebildete zweiteilige Gehäuse seitlich, d. h. in Y-Richtung, gegen den Grundkörper 1 abgedichtet werden. Dies ist in Figur 2 veranschaulicht.

Die Positionsmesseinrichtung weist ein an einem ersten Endabschnitt A, A` des ersten und zweiten Gehäuseteils 10.1, 10.2 angeordnetes erstes Deckelelement 10.3 und ein an einem dem ersten Endabschnitt A, A` gegenüberliegenden zweiten Endabschnitt B, B' des ersten und zweiten Gehäuseteils 10.1, 10.2 angeordnetes zweites Deckelelement 10.4 auf (vgl. Figur 8). Wie in Figur 8 zu erkennen ist, ist das dritte Dichtelement 20.3 zwischen dem ersten Endabschnitt A, A` und dem ersten Deckelelement 10.3 angeordnet. Ferner ist das vierte Dichtelement 20.4 zwischen dem zweiten Endabschnitt B, B` und dem zweiten Deckelelement 10.4 angeordnet. Insbesondere sind das dritte Dichtelement 20.3 und das vierte Dichtelement 20.4 jeweils plattenförmig ausgebildet. Des Weiteren ist in Figur 8 zu erkennen, dass das erste und zweite Deckelelement 10.3, 10.4 jeweils über eine Befestigungsschraube 4.41, 4.42 (Befestigungsschrauben 4.4) mit dem Grundkörper 1 verbindbar sind.

Das dritte Dichtelement 20.3 und das vierte Dichtelement 20.4 können jeweils auch als (kompressible) Dichtplatte bezeichnet werden.

Das erste und zweite Deckelelement 10.3, 10.4 stellen jeweils ein drittes bzw. viertes Gehäuseteil (endseitige Gehäuseteile) dar. Dies ist in Figur 1 veranschaulicht. Durch das dritte und vierte Dichtelement 20.3, 20.4 kann das durch das erste bis vierte Gehäuseteil 10.1 bis 10.4 gebildete Gehäuse jeweils endseitig, d. h. am ersten Endabschnitt A, A` bzw. am zweiten Endabschnitt B, B`, abgedichtet werden.

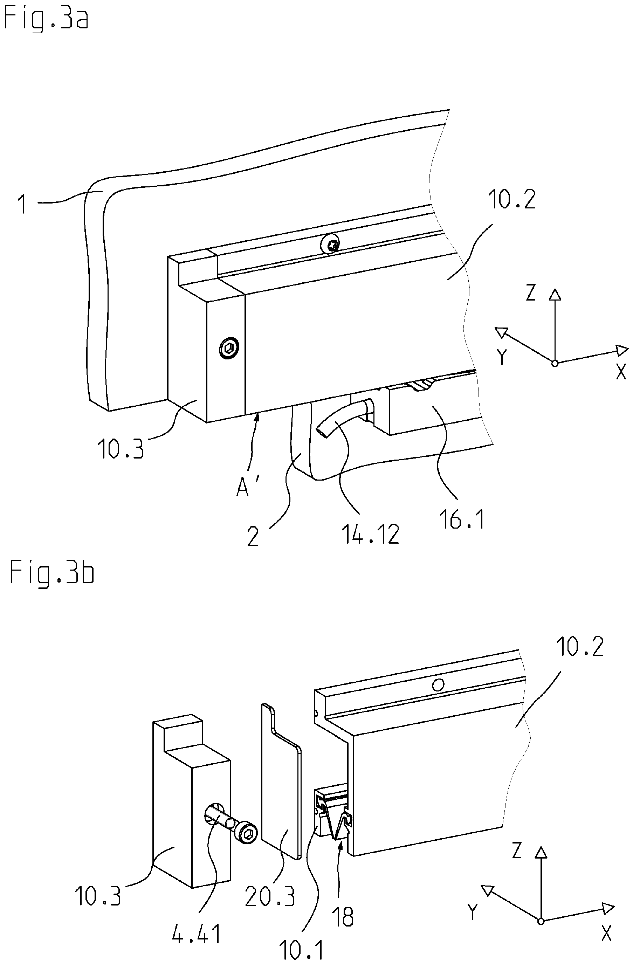

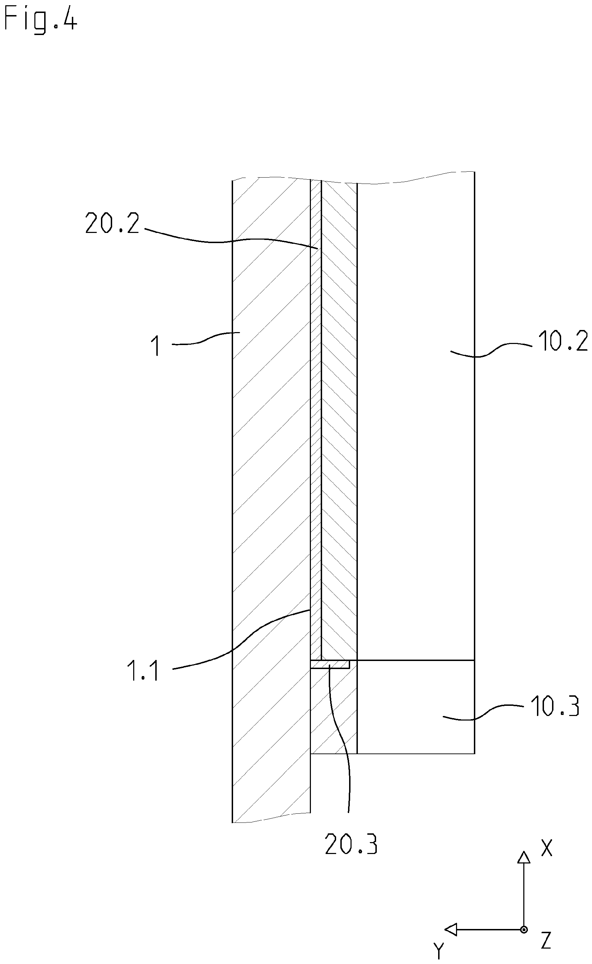

Figur 3a zeigt eine Endseite der Positionsmesseinrichtung nach Figur 1. In Figur 3a sind insbesondere der erste Endabschnitt A` des zweiten Gehäuseteils 10.2 und das erste Deckelelement 10.3 (drittes Gehäuseteil) gezeigt. Figur 3b zeigt das zwischen dem zweiten und dritten Gehäuseteil 10.2, 10.3 angeordnete dritte Dichtelement 20.3. In der Querschnittsansicht von Figur 4 sind das zweite und dritte Dichtelement 20.2, 20.3 zu erkennen. Wie in Figur 4 gezeigt, sind das zweite und dritte Dichtelement 20.2, 20.3 jeweils bündig mit der Anbaufläche 1.1 des Grundkörpers 1 angeordnet. Dadurch wird die seitliche Abdichtung des Gehäuses zum Grundkörper 1 hin erreicht. In Figur 4 ist dies für die in Figur 3a gezeigte Endseite veranschaulicht. Für die gegenüberliegende Endseite der Positionsmesseinrichtung ist die Situation analog.

Mit Bezug auf Figur 2 hat das erste Gehäuseteil 10.1 eine dritte Ausnehmung 11.3 zur Aufnahme der ersten Dichtlippe 18.1. Ferner hat das zweite Gehäuseteil 10.2 einen dem Grundkörper 1 abgewandten dritten Abschnitt 10.22. Das erste Gehäuseteil 10.1 und der dritte Abschnitt 10.22 sind in der zweiten Richtung (Y-Richtung) einander gegenüberliegend angeordnet. Wie in Figur 2 gezeigt, hat das zweite Gehäuseteil 10.2 eine in dem dritten Abschnitt 10.22 angeordnete vierte Ausnehmung 11.4 zur Aufnahme der zweiten Dichtlippe 18.2. Die dritte Ausnehmung 11.3 und die vierte Ausnehmung 11.4 erstrecken sich jeweils in Längsrichtung X. Die erste und zweite Dichtlippe 18.1, 18.2 sind von der dritten und vierten Ausnehmung 11.3, 11.4 jeweils über ihre gesamte Länge aufgenommen. Die Dichtlippen 18 dienen zur Abdichtung des durch den Grundkörper 1, das erste Gehäuseteil 10.1 und das zweite Gehäuseteil 10.2 gebildeten Hohlprofils 10 nach unten hin, d. h. in (negativer) Z-Richtung (vgl. Figur 2).

Durch das erste bis vierte Dichtelement 20.1 bis 20.4 in Verbindung mit den Dichtlippen 18 wird eine im Wesentlichen vollständige Abdichtung der Positionsmesseinrichtung erreicht. Insgesamt ergibt sich somit ein gegen ein Fluid (z. B. Kühlschmiermittel) gedichtetes System.

Die Positionsmesseinrichtung stellt insbesondere ein gekapseltes, ungeführtes System dar. Dabei ist die Abtasteinheit 14 relativ zum Hohlprofil 10 in Längsrichtung X, insbesondere unabhängig vom Maßstab 12 und unabhängig vom ersten und zweiten Gehäuseteil 10.1, 10.2 bewegbar (vgl. Figur 2). Wie in Figur 2 gezeigt, hat die Abtasteinheit 14 keine gemeinsame Führungsfläche mit dem Maßstab 12 oder mit dem ersten und zweiten Gehäuseteil 10.1, 10.2.

In den Figuren 5 bis 7 (bzw. 8) werden nähere Einzelheiten des Mitnehmers 16 erläutert. Gemäß Figur 8 hat der Mitnehmer 16 einen Montagebereich 16.1. Der Montagebereich 16.1 dient zur Verbindung des Mitnehmers 16 mit einem zu messenden Objekt 2. Wie in Figur 8 gezeigt, ist der Mitnehmer 16 über Befestigungsschrauben 4.3 mit dem zu messenden Objekt 2 verbindbar. Ferner weist der Mitnehmer 16 ein schwertförmiges Mittelstück 16.2, ein Adapterstück 16.3 und ein Verschlusselement 16.4 auf. Das Adapterstück 16.3 dient zur Verbindung der Abtasteinheit 14 mit dem schwertförmigen Mittelstück 16.2. Durch das Adapterstück 16.3 kann eine Einstellung der Abtasteinheit 14 relativ zum Maßstab 12 in mehreren Freiheitsgraden (z. B. Freiheitsgrade Y, RY, Z) vorgenommen werden. Durch das schwertförmige Mittelstück 16.2 werden das Adapterstück 16.3 und der Montagebereich 16.1 miteinander verbunden.

Wie in Figur 2 gezeigt, erstreckt sich das schwertförmige Mittelstück 16.2 vom Inneren des Hohlprofils 10 durch die Dichtlippen 18 hindurch bis zum außerhalb des Hohlprofils 10 angeordneten Montagebereich 16.1. Die Abtasteinheit 14 umfasst ein Kabel 14.1 (vgl. Figur 8). Das Kabel 14.1 hat einen oberen Abschnitt 14.11 und einen unteren Abschnitt 14.12. Der obere Abschnitt 14.11 erstreckt sich von der Abtasteinheit 14 bis zum schwertförmigen Mittelstück 16.2. Der untere Abschnitt 14.12 ist in Längsrichtung (X-Richtung) aus dem Montagebereich 16.1 herausgeführt (vgl. Figur 2 und 8).

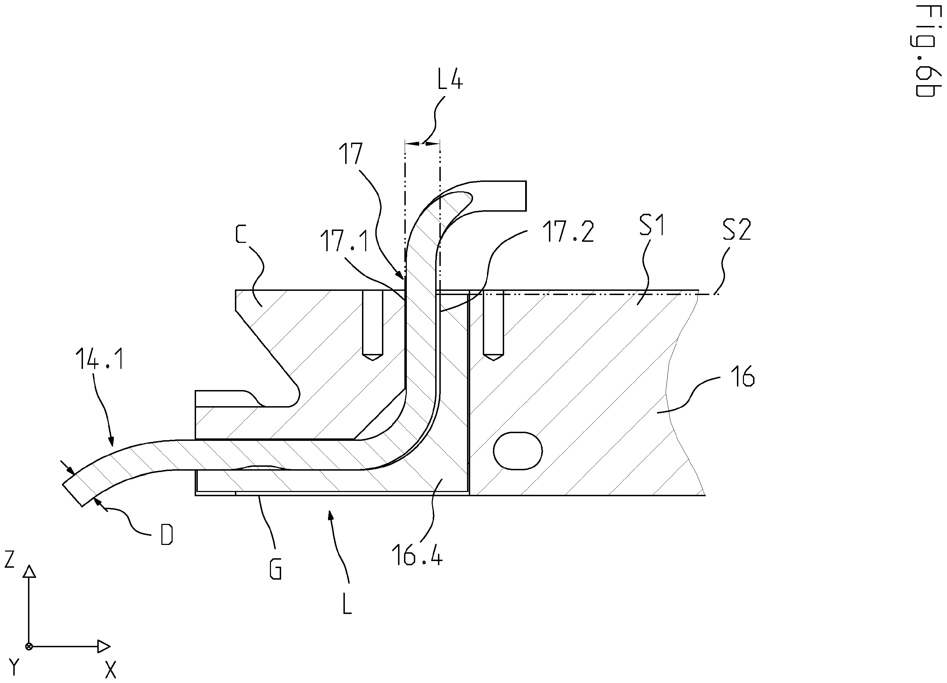

Der Mitnehmer 16 dient insbesondere dazu, die Abtasteinheit 14 zu tragen. Mit Bezug auf Figur 5a hat der Mitnehmer 16 eine Öffnung 17 zur Aufnahme und Hindurchführung des Kabels 14.1. Die Öffnung 17 erstreckt sich durch zumindest einen Teil des Mitnehmers 16 hindurch (vgl. Figur 6b). Dadurch kann das Kabel 14.1 durch zumindest einen Teil des Mitnehmers 16, insbesondere das schwertförmige Mittelstück 16.2, hindurch geführt werden.

In Bezug auf die Geometrie des Mitnehmers 16 entspricht die Längsrichtung (X-Richtung) einer Richtung, die parallel zu einer Längsausdehnung des Mitnehmers 16 verläuft. Ferner entspricht die erste Richtung (Z-Richtung) einer Richtung, die senkrecht zu einer Grundfläche G des Mitnehmers 16 verläuft. Darüber hinaus entspricht die zweite Richtung (Y-Richtung) einer Richtung, die senkrecht zur Längsausdehnung des Mitnehmers 16 und parallel zur Grundfläche G des Mitnehmers 16 verläuft.

Mit Bezug auf Figur 5a und 6b ist der Mitnehmer 16 derart ausgebildet, dass das Kabel 14.1 in der ersten Richtung (Z-Richtung) durch das schwertförmige Mittelstück 16.2 hindurch geführt werden kann. Ferner ist der Mitnehmer 16 derart ausgebildet, dass das Kabel 14.1 in Längsrichtung (X-Richtung) in einem Längsabschnitt L des Mitnehmers 16 durch den Montagebereich 16.1 hindurch geführt werden kann.

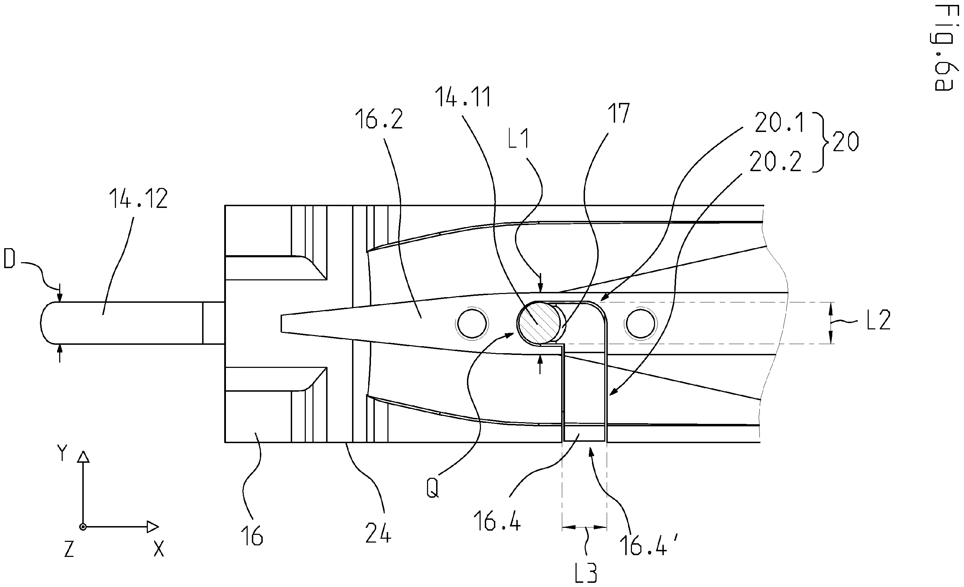

Mit Bezug auf Figur 6a hat das schwertförmige Mittelstück 16.2 eine erste Ausdehnung L1 in der zweiten Richtung (Y-Richtung). Beispielsweise liegt die erste Ausdehnung L1 in einem Bereich vom 1,0-fachen bis zum 1,5-fachen oder im Bereich vom 1,0-fachen bis zum 1,25-fachen eines Durchmessers D des Kabels 14.1. Somit ist die erste Ausdehnung L1 größer, insbesondere geringfügig größer, oder gleich dem Durchmesser D des Kabels 14.1. Die erste Ausdehnung L1 (d. h. Breite des schwertförmigen Mittelstücks 16.2) ist also derart angepasst, dass das Kabel 14.1 in seinem Querschnitt vom schwertförmigen Mittelstück 16.2 aufgenommen werden kann.

In Figur 5b ist gezeigt, dass der Mitnehmer 16 eine im Längsabschnitt L des Mitnehmers 16 vorgesehene Aussparung 16.4' zum seitlichen Einlegen des Kabels 14.1 in den Mitnehmer 16 hat. Mit Bezug auf Figur 6a weist die Aussparung 16.4' einen die Öffnung 17 umfassenden ersten Teilabschnitt 20.1 (Langloch) und einen an den ersten Teilabschnitt 20.1 angrenzenden zweiten Teilabschnitt 20.2 auf. Durch den ersten Teilabschnitt 20.1 und den zweiten Teilabschnitt 20.2 wird ein in einer Draufsicht auf den Mitnehmer 16 L-förmig ausgebildeter Abschnitt 20 gebildet. Der erste Teilabschnitt 20.1 erstreckt sich in Längsrichtung (X-Richtung). Der zweite Teilabschnitt 20.2 erstreckt sich in der zweiten Richtung (Y-Richtung). Der erste Teilabschnitt 20.1 ist in einem Mittenbereich Q des Mitnehmers 16 angeordnet. Der zweite Teilabschnitt 20.2 erstreckt sich von einer seitlichen Oberfläche 24 des Mitnehmers 16 bis zum Mittenbereich Q des Mitnehmers 16.

Bezug nehmend auf Figur 6a hat der erste Teilabschnitt 20.1 eine zweite Ausdehnung L2 in der zweiten Richtung (Y-Richtung). Ferner hat der zweite Teilabschnitt 20.2 eine dritte Ausdehnung L3 in Längsrichtung (X-Richtung). Beispielsweise liegen die zweite Ausdehnung L2 und/oder die dritte Ausdehnung L3 jeweils in einem Bereich vom 1,0-fachen bis zum 1,25-fachen oder im Bereich vom 1,0-fachen bis zum 1,15-fachen des Durchmessers D des Kabels 14.1. Somit sind die zweite bzw. dritte Ausdehnung L2, L3 jeweils größer, insbesondere minimal größer, oder gleich dem Durchmesser D des Kabels 14.1. Dadurch wird über den L-förmig ausgebildeten Abschnitt 20 das seitliche Einlegen des Kabels 14.1 in den Mitnehmer 16 ermöglicht.

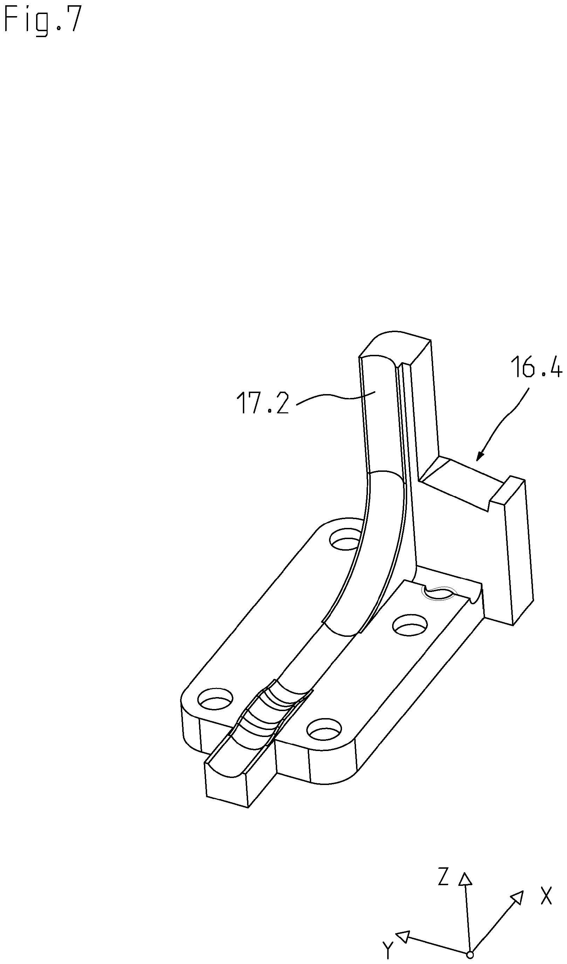

Mit Bezug auf Figur 5b weist der Mitnehmer 16 das mit der Aussparung 16.4' korrespondierende Verschlusselement 16.4 auf (vgl. auch Figur 7). Das Verschlusselement 16.4 ist mit einem zum Verschlusselement 16.4 komplementären Teil C des Mitnehmers 16 lösbar verbunden. Wie in Figur 6b gezeigt, hat der Mitnehmer 16 eine erste Innenkontur 17.1. Ferner hat das Verschlusselement 16.4 eine der ersten Innenkontur 17.1 gegenüberliegende zweite Innenkontur 17.2. Die erste Innenkontur 17.1 und die zweite Innenkontur 17.2 erstrecken sich jeweils durch den Längsabschnitt L des Mitnehmers 16 hindurch. Durch die erste Innenkontur 17.1 und die zweite Innenkontur 17.2 wird die Öffnung 17 zur Aufnahme und Hindurchführung des Kabels 14.1 gebildet.

In Figur 6b ist eine Querschnittsebene S1, die parallel zu einer Längsausdehnung des Mitnehmers 16 und senkrecht zur Grundfläche G des Mitnehmers 16 verläuft, gezeigt. Die Querschnittsebene S1 verläuft zudem durch das Kabel 14.1 (bzw. die Öffnung 17). Beispielsweise hat die durch die erste und zweite Innenkontur 17.1, 17.2 gebildete Öffnung 17 einen bogenförmigen oder abgewinkelten Verlauf. Gemäß Figur 6b hat dieser Verlauf eine im Wesentlichen L-Form.

In Figur 5b ist das Verschlusselement 16.4 im gelösten Zustand gezeigt. Das Verschlusselement 16.4 ist über Befestigungsschrauben 4.5 mit dem komplementären Teil C des Mitnehmers 16 verbindbar.

Bezug nehmend auf Figur 5b ist die Aussparung 16.4' derart ausgebildet, dass, wenn das Verschlusselement 16.4 vom komplementären Teil C gelöst ist (d. h. gelöster Zustand), das Kabel 14.1 in der zweiten Richtung (Y-Richtung) in den Mitnehmer 16 eingelegt werden kann.

Das Verschlusselement 16.4 hat insbesondere eine Doppelfunktion. Einerseits dient das Verschlusselement 16.4 dazu, die Aussparung 16.4' (bzw. den Mitnehmer 16) wieder zu verschließen, nachdem das Kabel 14.1 in den Mitnehmer 16 seitlich eingelegt wurde. Andererseits ist das Verschlusselement 16.4 dazu ausgebildet, im verbundenen Zustand eine Zugentlastung für das Kabel 14.1 zu bewirken. In Figur 7 ist die Innenwandung (zweite Innenkontur 17.2) des Verschlusselements 16.4 gut sichtbar.

Die Öffnung 17 hat beispielsweise einen runden, quadratischen oder rechteckigen Querschnitt. Wie in Figur 6b zu erkennen ist, hat die Öffnung 17 eine vierte Ausdehnung L4 in einer Ebene S2. Die Ebene S2 verläuft dabei parallel zur Grundfläche G des Mitnehmers 16. Beispielsweise liegt die vierte Ausdehnung L4 in einem Bereich vom 1,0-fachen bis zum 1,25-fachen oder im Bereich vom 1,0-fachen bis zum 1,15-fachen des Durchmessers D des Kabels 14.1. In vorteilhafter Weise ist der Querschnitt der Öffnung 17 an den Querschnitt des Kabels 14.1 angepasst (vgl. Figur 6a).

Vorzugsweise liegt die vierte Ausdehnung L4 in einem Bereich von 2 mm bis 20 mm oder im Bereich von 5 mm bis 15 mm.

Der Mitnehmer 16 ist Teil der in den Figuren 1 bis 8 erläuterten Positionsmesseinrichtung (d. h. gekapselte Längenmesseinrichtung mit dem zweiteiligen Gehäuse). Alternativ kann der Mitnehmer 16 auch für den Einsatz in einer gekapselten Längenmesseinrichtung mit einem einteiligen Gehäuse geeignet sein.

Ein Teilesatz für die in den Figuren 1 bis 8 erläuterte Positionsmesseinrichtung umfasst das erste Gehäuseteil 10.1, das mit dem Grundkörper 1 verbindbar ist, und das zweite Gehäuseteil 10.2, das mit dem Grundkörper 1 verbindbar ist. Ferner weist der Teilesatz den Mitnehmer 16 zum Tragen der Abtasteinheit 14 auf.

Des Weiteren kann der Teilesatz die zusätzlichen Elemente 10.1 bis 10.4, 20.1 bis 20.4 und 18 aufweisen (gesamter Teilesatz). Durch Montage des Teilesatzes kann ein aus dem Maßstab 12 und der Abtasteinheit 14 bestehendes, bereits verfügbares offenes Längenmesssystem (d. h. System ohne Kapselung) gekapselt werden.

Die Erfindung hat insbesondere die folgenden Vorteile. Der Teilesatz eignet sich zur Kapselung eines beliebigen offenen Längenmesssystems (universelle Anwendbarkeit). Dabei sind keine Änderung des Montageablaufs oder Montageverfahrens des offenen Längenmesssystems bzw. keine Umkonstruktion (z. B. Sonderkabelbaugruppe) desselben nötig. Durch den vereinfachten Aufbau der Positionsmesseinrichtung ergeben sich geringe Systemkosten. Es wird eine Demontage des Gehäuses der Positionsmesseinrichtung (z. B. für eine Reinigung) ohne eine Dejustage derselben ermöglicht.

Die Erfindung ist insbesondere dahingehend vorteilhaft, dass durch den Teilesatz eine Kompatibilität zu allen bisher ungekapselten, offenen Längenmesssystemen geschaffen wird.

Die Erfindung ermöglicht eine besonders hochauflösende Positionsmessung, wenn die Messteilung optisch abtastbar ausgebildet ist. Die Messteilung kann alternativ auch magnetisch, induktiv oder kapazitiv abtastbar ausgebildet sein.

## Patentansprüche

1. Positionsmesseinrichtung, mit
einem Grundkörper (1),
einem sich in einer Längsrichtung (X) erstreckenden und mit dem Grundkörper (1) verbundenen ersten Gehäuseteil (10.1), und
einem sich in Längsrichtung (X) erstreckenden und mit dem Grundkörper (1) verbundenen zweiten Gehäuseteil (10.2),
wobei durch zumindest das erste Gehäuseteil (10.1) und das zweite Gehäuseteil (10.2) ein Hohlprofil (10) gebildet wird,
wobei die Positionsmesseinrichtung einen innerhalb des Hohlprofils (10) angeordneten Maßstab (12) und eine Abtasteinheit (14) zur Abtastung des Maßstabs (12) aufweist,
wobei der Grundkörper (1) und der Maßstab (12) unmittelbar miteinander verbunden sind,
wobei die Positionsmesseinrichtung einen Mitnehmer (16) zum Tragen der Abtasteinheit (14) aufweist, wobei die Abtasteinheit (14) ein Kabel (14.1) umfasst, wobei der Mitnehmer (16) derart ausgebildet ist, dass das Kabel (14.1) durch zumindest einen Teil des Mitnehmers (16) hindurch geführt werden kann,
**dadurch gekennzeichnet, dass** der Mitnehmer (16) eine in einem Längsabschnitt (L) des Mitnehmers (16) vorgesehene Aussparung (16.4') hat, dass der Mitnehmer (16) ein mit der Aussparung (16.4') korrespondierendes und mit einem komplementären Teil (C) des Mitnehmers (16) lösbar verbundenes Verschlusselement (16.4) aufweist, dass der Mitnehmer (16) eine erste Innenkontur (17.1) hat, dass das Verschlusselement (16.4) eine der ersten Innenkontur (17.1) gegenüberliegende zweite Innenkontur (17.2) hat, dass durch die erste Innenkontur (17.1) und die zweite Innenkontur (17.2) eine Öffnung (17) zur Aufnahme und Hindurchführung des Kabels (14.1) gebildet wird, und dass sich die Öffnung (17) durch den Längsabschnitt (L) des Mitnehmers (16) hindurch erstreckt.

2. Positionsmesseinrichtung nach Anspruch 1, wobei der Maßstab (12) an eine Anbaufläche (1.1) des Grundkörpers (1) angrenzt.

3. Positionsmesseinrichtung nach Anspruch 1 oder 2, wobei der Grundkörper (1) und das erste Gehäuseteil (10.1) und/oder der Grundkörper (1) und das zweite Gehäuseteil (10.2) jeweils unmittelbar miteinander verbunden sind.

4. Positionsmesseinrichtung nach einem der vorhergehenden Ansprüche, wobei das Hohlprofil (10) durch den Grundkörper (1), das erste Gehäuseteil (10.1) und das zweite Gehäuseteil (10.2) gebildet wird.

5. Positionsmesseinrichtung nach einem der vorhergehenden Ansprüche, wobei das erste Gehäuseteil (10.1) einen ersten Abschnitt (10.11) zur Befestigung des ersten Gehäuseteils (10.1) am Grundkörper (1) hat, wobei das zweite Gehäuseteil (10.2) einen dem Grundkörper (1) zugewandten zweiten Abschnitt (10.21) zur Befestigung des zweiten Gehäuseteils (10.2) am Grundkörper (1) hat, wobei der erste Abschnitt (10.11) auf einer ersten Seite des Maßstabs (12) angeordnet ist, wobei der zweite Abschnitt (10.21) auf einer der ersten Seite gegenüberliegenden zweiten Seite des Maßstabs (12) angeordnet ist, wobei der erste Abschnitt (10.11) und der zweite Abschnitt (10.21) in einer ersten Richtung (Z), die senkrecht zur Längsrichtung (X) und parallel zu einer Anbaufläche (1.1) des Grundkörpers (1) verläuft, einander gegenüberliegend angeordnet sind.

6. Positionsmesseinrichtung nach einem der vorhergehenden Ansprüche, wobei die Positionsmesseinrichtung mindestens ein erstes Dichtelement (20.1) und ein zweites Dichtelement (20.2) aufweist, wobei das erste Gehäuseteil (10.1) eine an den Grundkörper (1) angrenzende erste Ausnehmung (11.1) zur Aufnahme des ersten Dichtelements (20.1) hat, wobei das zweite Gehäuseteil (10.2) eine an den Grundkörper (1) angrenzende zweite Ausnehmung (11.2) zur Aufnahme des zweiten Dichtelements (20.2) hat, wobei sich die erste Ausnehmung (11.1) und die zweite Ausnehmung (11.2) jeweils in Längsrichtung (X) erstrecken.

7. Positionsmesseinrichtung nach Anspruch 6, wobei das erste Dichtelement (20.1) eine erste Dichtschnur ist, wobei das zweite Dichtelement (20.2) eine zweite Dichtschnur ist, wobei sich das erste Dichtelement (20.1) und das zweite Dichtelement (20.2) jeweils in Längsrichtung (X) erstrecken.

8. Positionsmesseinrichtung nach einem der vorhergehenden Ansprüche, wobei die Positionsmesseinrichtung ein an einem ersten Endabschnitt (A, A') des ersten und zweiten Gehäuseteils (10.1, 10.2) angeordnetes erstes Deckelelement (10.3) und ein an einem dem ersten Endabschnitt (A, A`) gegenüberliegenden zweiten Endabschnitt (B, B') des ersten und zweiten Gehäuseteils (10.1, 10.2) angeordnetes zweites Deckelelement (10.4) aufweist, wobei die Positionsmesseinrichtung ein drittes Dichtelement (20.3) und ein viertes Dichtelement (20.4) aufweist, wobei das dritte Dichtelement (20.3) zwischen dem ersten Endabschnitt (A, A`) und dem ersten Deckelelement (10.3) angeordnet ist, wobei das vierte Dichtelement (20.4) zwischen dem zweiten Endabschnitt (B, B') und dem zweiten Deckelelement (10.4) angeordnet ist, wobei das dritte Dichtelement (20.3) und das vierte Dichtelement (20.4) jeweils plattenförmig ausgebildet sind.

9. Positionsmesseinrichtung nach einem der vorhergehenden Ansprüche, wobei der Mitnehmer (16) ein schwertförmiges Mittelstück (16.2) aufweist, wobei der Mitnehmer (16) derart ausgebildet ist, dass das Kabel (14.1) in einer ersten Richtung (Z), die senkrecht zur Längsrichtung (X) und parallel zu einer Anbaufläche (1.1) des Grundkörpers (1) verläuft, durch das schwertförmige Mittelstück (16.2) hindurch geführt werden kann.

10. Positionsmesseinrichtung nach einem der vorhergehenden Ansprüche, wobei die Aussparung (16.4') derart ausgebildet ist, dass, wenn das Verschlusselement (16.4) vom komplementären Teil (C) des Mitnehmers (16) gelöst ist, das Kabel (14.1) seitlich in den Mitnehmer (16) eingelegt werden kann.

11. Positionsmesseinrichtung nach einem der vorhergehenden Ansprüche, wobei das erste Gehäuseteil (10.1) eine dritte Ausnehmung (11.3) zur Aufnahme einer ersten Dichtlippe (18.1) hat, wobei das zweite Gehäuseteil (10.2) einen dem Grundkörper (1) abgewandten dritten Abschnitt (10.22) hat, wobei das erste Gehäuseteil (10.1) und der dritte Abschnitt (10.22) in einer zweiten Richtung (Y), die senkrecht zu einer Anbaufläche (1.1) des Grundkörpers (1) verläuft, einander gegenüberliegend angeordnet sind, wobei das zweite Gehäuseteil (10.2) eine in dem dritten Abschnitt (10.22) angeordnete vierte Ausnehmung (11.4) zur Aufnahme einer zweiten Dichtlippe (18.2) hat, wobei sich die dritte Ausnehmung (11.3) und die vierte Ausnehmung (11.4) jeweils in Längsrichtung (X) erstrecken.

12. Positionsmesseinrichtung nach einem der vorhergehenden Ansprüche, wobei die Abtasteinheit (14) relativ zum Hohlprofil (10) in Längsrichtung (X), vorzugsweise unabhängig vom Maßstab (12) und/oder unabhängig vom ersten und zweiten Gehäuseteil (10.1, 10.2), bewegbar ist.

13. Teilesatz für eine Positionsmesseinrichtung nach einem der vorhergehenden Ansprüche, wobei der Teilesatz ein erstes sich in einer Längsrichtung (X) erstreckendes Gehäuseteil (10.1), das mit einem Grundkörper (1) verbindbar ist, und ein zweites sich in einer Längsrichtung (X) erstreckendes Gehäuseteil (10.2), das mit dem Grundkörper (1) verbindbar ist, umfasst, wobei durch zumindest das erste Gehäuseteil (10.1) und das zweite Gehäuseteil (10.2) ein Hohlprofil (10) gebildet wird, wobei der Teilesatz einen Mitnehmer (16) zum Tragen einer Abtasteinheit aufweist, wobei der Mitnehmer (16) derart ausgebildet ist, dass das Kabel (14.1) durch zumindest einen Teil des Mitnehmers (16) hindurch geführt werden kann, **dadurch gekennzeichnet, dass** der Mitnehmer (16) eine in einem Längsabschnitt (L) des Mitnehmers (16) vorgesehene Aussparung (16.4') hat, dass der Mitnehmer (16) ein mit der Aussparung (16.4') korrespondierendes und mit einem komplementären Teil (C) des Mitnehmers (16) lösbar verbundenes Verschlusselement (16.4) aufweist, dass der Mitnehmer (16) eine erste Innenkontur (17.1) hat, dass das Verschlusselement (16.4) eine der ersten Innenkontur (17.1) gegenüberliegende zweite Innenkontur (17.2) hat, dass durch die erste Innenkontur (17.1) und die zweite Innenkontur (17.2) eine Öffnung (17) zur Aufnahme und Hindurchführung des Kabels (14.1) gebildet wird, und dass sich die Öffnung (17) durch den Längsabschnitt (L) des Mitnehmers (16) hindurch erstreckt.

## Claims

1. Position measuring device, having
a basic body (1),
a first housing part (10.1) extending in a longitudinal direction (X) and connected to the basic body (1), and
a second housing part (10.2) extending in the longitudinal direction (X) and connected to the basic body (1),
wherein a hollow profile (10) is formed by at least the first housing part (10.1) and the second housing part (10.2),
wherein the position measuring device has a scale (12) arranged within the hollow profile (10) and a scanning unit (14) for scanning the scale (12),
wherein the basic body (1) and the scale (12) are directly connected to each other,
wherein the position measuring device has a driver (16) for carrying the scanning unit (14), wherein the scanning unit (14) comprises a cable (14.1), wherein the driver (16) is designed in such a manner that the cable (14.1) can be guided through at least part of the driver (16), **characterized in that** the driver (16) has a cutout (16.4') provided in a longitudinal section (L) of the driver (16), **in that** the driver (16) has a closure element (16.4) corresponding to the cutout (16.4') and connected releasably to a complementary part (C) of the driver (16), **in that** the driver (16) has a first inner contour (17.1), **in that** the closure element (16.4) has a second inner contour (17.2) opposite the first inner contour (17.1), **in that** an opening (17) for the receiving and guiding through of the cable (14.1) is formed by the first inner contour (17.1) and the second inner contour (17.2), and **in that** the opening (17) extends through the longitudinal section (L) of the driver (16).

2. Position measuring device according to Claim 1, wherein the scale (12) is adjacent to a mounting surface (1.1) of the basic body (1).

3. Position measuring device according to Claim 1 or 2, wherein the basic body (1) and the first housing part (10.1) and/or the basic body (1) and the second housing part (10.2) are each connected directly to each another.

4. Position measuring device according to one of the preceding claims, wherein the hollow profile (10) is formed by the basic body (1), the first housing part (10.1) and the second housing part (10.2).

5. Position measuring device according to one of the preceding claims, wherein the first housing part (10.1) has a first section (10.11) for fastening the first housing part (10.1) to the basic body (1), wherein the second housing part (10.2) has a second section (10.21) facing the basic body (1) for fastening the second housing part (10.2) to the basic body (1), wherein the first section (10.11) is arranged on a first side of the scale (12), wherein the second section (10.21) is arranged on a second side of the scale (12) opposite the first side, wherein the first section (10.11) and the second section (10.21) are arranged opposite each other in a first direction (Z) which runs perpendicularly to the longitudinal direction (X) and parallel to a mounting surface (1.1) of the basic body (1).

6. Position measuring device according to one of the preceding claims, wherein the position measuring device has at least a first sealing element (20.1) and a second sealing element (20.2), wherein the first housing part (10.1) has a first recess (11.1) adjacent to the basic body (1) for receiving the first sealing element (20.1), wherein the second housing part (10.2) has a second recess (11.2) adjacent to the basic body (1) for receiving the second sealing element (20.2), wherein the first recess (11.1) and the second recess (11.2) each extend in the longitudinal direction (X).

7. Position measuring device according to Claim 6, wherein the first sealing element (20.1) is a first sealing cord, wherein the second sealing element (20.2) is a second sealing cord, wherein the first sealing element (20.1) and the second sealing element (20.2) each extend in the longitudinal direction (X).

8. Position measuring device according to one of the preceding claims, wherein the position measuring device has a first cover element (10.3) arranged on a first end section (A, A') of the first and second housing part (10.1, 10.2) and a second cover element (10.4) arranged on a second end section (B, B'), which is opposite the first end section (A, A'), of the first and second housing part (10.1, 10.2), wherein the position measuring device has a third sealing element (20.3) and a fourth sealing element (20.4), wherein the third sealing element (20.3) is arranged between the first end section (A, A') and the first cover element (10.3), wherein the fourth sealing element (20.4) is arranged between the second end section (B, B') and the second cover element (10.4), wherein the third sealing element (20.3) and the fourth sealing element (20.4) are each plate-like.

9. Position measuring device according to one of the preceding claims, wherein the driver (16) has a blade-shaped central piece (16.2), wherein the driver (16) is designed in such a manner that the cable (14.1) can be guided through the blade-shaped central piece (16.2) in a first direction (Z) which runs perpendicularly to the longitudinal direction (X) and parallel to a mounting surface (1.1) of the basic body (1).

10. Position measuring device according to one of the preceding claims, wherein the cutout (16.4') is designed in such a manner that, when the closure element (16.4) is released from the complementary part (C) of the driver (16), the cable (14.1) can be placed laterally into the driver (16).

11. Position measuring device according to one of the preceding claims, wherein the first housing part (10.1) has a third recess (11.3) for receiving a first sealing lip (18.1), wherein the second housing part (10.2) has a third section (10.22) facing away from the basic body (1), wherein the first housing part (10.1) and the third section (10.22) are arranged opposite each other in a second direction (Y) which runs perpendicularly to a mounting surface (1.1) of the basic body (1), wherein the second housing part (10.2) has a fourth recess (11.4) arranged in the third section (10.22) for receiving a second sealing lip (18.2), wherein the third recess (11.3) and the fourth recess (11.4) each extend in the longitudinal direction (X).

12. Position measuring device according to one of the preceding claims, wherein the scanning unit (14) is movable relative to the hollow profile (10) in the longitudinal direction (X), preferably independently of the scale (12) and/or independently of the first and second housing part (10.1, 10.2).

13. Parts kit for a position measuring device according to one of the preceding claims, wherein the parts kit comprises a first housing part (10.1) which extends in a longitudinal direction (X) and is connectable to a basic body (1), and a second housing part (10.2) which extends in a longitudinal direction (X) and is connectable to the basic body (1), wherein a hollow profile (10) is formed by at least the first housing part (10.1) and the second housing part (10.2), wherein the parts kit has a driver (16) for carrying a scanning unit, wherein the driver (16) is designed in such a manner that the cable (14.1) can be guided through at least part of the driver (16), **characterized in that** the driver (16) has a cutout (16.4') provided in a longitudinal section (L) of the driver (16), **in that** the driver (16) has a closure element (16.4) which corresponds to the cutout (16.4') and is connected releasably to a complementary part (C) of the driver (16), **in that** the driver (16) has a first inner contour (17.1), **in that** the closure element (16.4) has a second inner contour (17.2) opposite the first inner contour (17.1), **in that** an opening (17) for the receiving and guiding through of the cable (14.1) is formed by the first inner contour (17.1) and the second inner contour (17.2), and **in that** the opening (17) extends through the longitudinal section (L) of the driver (16).

## Revendications

1. Dispositif de mesure de position, avec
un corps de base (1),
une première partie de boîtier (10.1) s'étendant dans une direction longitudinale (X) et reliée au corps de base (1), et
une deuxième partie de boîtier (10.2) s'étendant dans la direction longitudinale (X) et reliée au corps de base (1),
un profilé creux (10) étant formé par au moins la première partie de boîtier (10.1) et la deuxième partie de boîtier (10.2),
le dispositif de mesure de position présentant une règle graduée (12) agencée à l'intérieur du profilé creux (10) et une unité de balayage (14) pour le balayage de la règle graduée (12),
le corps de base (1) et la règle graduée (12) étant directement reliés entre eux,
le dispositif de mesure de position présentant un entraîneur (16) pour porter l'unité de balayage (14), l'unité de balayage (14) comprenant un câble (14.1), l'entraîneur (16) étant configuré de telle sorte que le câble (14.1) peut être guidé à travers au moins une partie de l'entraîneur (16),
**caractérisé en ce que** l'entraîneur (16) a un creux (16.4') prévu dans une section longitudinale (L) de l'entraîneur (16), **en ce que** l'entraîneur (16) présente un élément de fermeture (16.4) correspondant au creux (16.4') et relié de manière détachable à une partie complémentaire (C) de l'entraîneur (16), **en ce que** l'entraîneur (16) a un premier contour intérieur (17.1), **en ce que** l'élément de fermeture (16.4) a un deuxième contour intérieur (17.2) opposé au premier contour intérieur (17.1), **en ce qu'**une ouverture (17) est formée par le premier contour intérieur (17.1) et le deuxième contour intérieur (17.2) pour recevoir et faire passer le câble (14.1), et **en ce que** l'ouverture (17) s'étend à travers la section longitudinale (L) de l'entraîneur (16) .

2. Dispositif de mesure de position selon la revendication 1, la règle graduée (12) étant adjacente à une surface de montage (1.1) du corps de base (1).

3. Dispositif de mesure de position selon la revendication 1 ou 2, le corps de base (1) et la première partie de boîtier (10.1) et/ou le corps de base (1) et la deuxième partie de boîtier (10.2) étant respectivement reliés directement entre eux.

4. Dispositif de mesure de position selon l'une quelconque des revendications précédentes, le profilé creux (10) étant formé par le corps de base (1), la première partie de boîtier (10.1) et la deuxième partie de boîtier (10.2).

5. Dispositif de mesure de position selon l'une quelconque des revendications précédentes, la première partie de boîtier (10.1) ayant une première section (10.11) pour la fixation de la première partie de boîtier (10.1) au corps de base (1), la deuxième partie de boîtier (10.2) ayant une deuxième section (10.21) tournée vers le corps de base (1) pour la fixation de la deuxième partie de boîtier (10.2) au corps de base (1), la première section (10.11) étant agencée sur un premier côté de la règle graduée (12), la deuxième section (10.21) étant agencée sur un deuxième côté de la règle graduée (12) opposé au premier côté, la première section (10.11) et la deuxième section (10.21) étant agencées en face l'une de l'autre dans une première direction (Z) qui s'étend perpendiculairement à la direction longitudinale (X) et parallèlement à une surface de montage (1.1) du corps de base (1).

6. Dispositif de mesure de position selon l'une quelconque des revendications précédentes, le dispositif de mesure de position présentant au moins un premier élément d'étanchéité (20.1) et un deuxième élément d'étanchéité (20.2), la première partie de boîtier (10.1) ayant un premier évidement (11.1) adjacent au corps de base (1) pour recevoir le premier élément d'étanchéité (20.1), la deuxième partie de boîtier (10.2) ayant un deuxième évidement (11.2) adjacent au corps de base (1) pour recevoir le deuxième élément d'étanchéité (20.2), le premier évidement (11.1) et le deuxième évidement (11.2) s'étendant respectivement dans la direction longitudinale (X).

7. Dispositif de mesure de position selon la revendication 6, le premier élément d'étanchéité (20.1) étant un premier cordon d'étanchéité, le deuxième élément d'étanchéité (20.2) étant un deuxième cordon d'étanchéité, le premier élément d'étanchéité (20.1) et le deuxième élément d'étanchéité (20.2) s'étendant respectivement dans la direction longitudinale (X).

8. Dispositif de mesure de position selon l'une quelconque des revendications précédentes, le dispositif de mesure de position présentant un premier élément de couvercle (10.3) agencé sur une première section d'extrémité (A, A') des première et deuxième parties de boîtier (10.1, 10.2) et un deuxième élément de couvercle (10.4) agencé sur une deuxième section d'extrémité (B, B') des première et deuxième parties de boîtier (10.1, 10.2) opposée à la première section d'extrémité (A, A'), le dispositif de mesure de position présentant un troisième élément d'étanchéité (20.3) et un quatrième élément d'étanchéité (20.4), le troisième élément d'étanchéité (20.3) étant agencé entre la première section d'extrémité (A, A') et le premier élément de couvercle (10.3), le quatrième élément d'étanchéité (20.4) étant agencé entre la deuxième section d'extrémité (B, B') et le deuxième élément de couvercle (10.4), le troisième élément d'étanchéité (20.3) et le quatrième élément d'étanchéité (20.4) étant respectivement configurés en forme de plaque.

9. Dispositif de mesure de position selon l'une quelconque des revendications précédentes, l'entraîneur (16) présentant une pièce centrale (16.2) en forme de sabre, l'entraîneur (16) étant configuré de telle sorte que le câble (14.1) peut être guidé à travers la pièce centrale (16.2) en forme de sabre dans une première direction (Z) qui s'étend perpendiculairement à la direction longitudinale (X) et parallèlement à une surface de montage (1.1) du corps de base (1).

10. Dispositif de mesure de position selon l'une quelconque des revendications précédentes, le creux (16.4') étant configuré de telle sorte que, lorsque l'élément de fermeture (16.4) est détaché de la partie complémentaire (C) de l'entraîneur (16), le câble (14.1) peut être inséré latéralement dans l'entraîneur (16).

11. Dispositif de mesure de position selon l'une quelconque des revendications précédentes, la première partie de boîtier (10.1) ayant un troisième évidement (11.3) pour recevoir une première lèvre d'étanchéité (18.1), la deuxième partie de boîtier (10.2) ayant une troisième section (10.22) détournée du corps de base (1), la première partie de boîtier (10.1) et la troisième section (10.22) étant agencées en face l'une de l'autre dans une deuxième direction (Y) qui s'étend perpendiculairement à une surface de montage (1.1) du corps de base (1), la deuxième partie de boîtier (10.2) ayant un quatrième évidement (11.4) agencé dans la troisième section (10.22) pour recevoir une deuxième lèvre d'étanchéité (18.2), le troisième évidement (11.3) et le quatrième évidement (11.4) s'étendant respectivement dans la direction longitudinale (X).

12. Dispositif de mesure de position selon l'une quelconque des revendications précédentes, l'unité de balayage (14) étant mobile par rapport au profilé creux (10) dans la direction longitudinale (X), de préférence indépendamment de la règle graduée (12) et/ou indépendamment des première et deuxième parties de boîtier (10.1, 10.2).

13. Jeu de pièces pour un dispositif de mesure de position selon l'une quelconque des revendications précédentes, le jeu de pièces comprenant une première partie de boîtier (10.1) s'étendant dans une direction longitudinale (X), qui peut être reliée à un corps de base (1), et une deuxième partie de boîtier (10.2) s'étendant dans une direction longitudinale (X), qui peut être reliée au corps de base (1), un profilé creux (10) étant formé par au moins la première partie de boîtier (10.1) et la deuxième partie de boîtier (10.2), le jeu de pièces présentant un entraîneur (16) pour porter une unité de balayage, l'entraîneur (16) étant configuré de telle sorte que le câble (14.1) peut être guidé à travers au moins une partie de l'entraîneur (16), **caractérisé en ce que** l'entraîneur (16) a un creux (16.4') prévu dans une section longitudinale (L) de l'entraîneur (16), **en ce que** l'entraîneur (16) présente un élément de fermeture (16.4) correspondant au creux (16.4') et relié de manière détachable à une partie complémentaire (C) de l'entraîneur (16), **en ce que** l'entraîneur (16) a un premier contour intérieur (17.1), **en ce que** l'élément de fermeture (16.4) a un deuxième contour intérieur (17.2) opposé au premier contour intérieur (17.1), **en ce qu'**une ouverture (17) est formée par le premier contour intérieur (17.1) et le deuxième contour intérieur (17.2) pour recevoir et faire passer le câble (14.1), et **en ce que** l'ouverture (17) s'étend à travers la section longitudinale (L) de l'entraîneur (16).
